# EUROPÄISCHE PATENTSCHRIFT

(11) **EP 1 769 422 B1**
(45) Veröffentlichungstag und Bekanntmachung des Hinweises auf die Patenterteilung: **21.01.2009**
(21) Anmeldenummer: 05773326.3
(22) Anmeldetag: 11.07.2005
(51) Int. Cl.: G06K 7/00, G06K 19/07

(54) **MODULATOR UND MODULATIONSVERFAHREN FÜR EINE EINRICHTUNG ZUR DRAHTLOSEN DATENÜBERTRAGUNG**
MODULATOR AND MODULATION METHOD FOR A WIRELESS DATA TRANSMISSION DEVICE
MODULATEUR ET PROCEDE DE MODULATION DESTINES A UN EQUIPEMENT DE TRANSMISSION DE DONNEES SANS FIL

(30) Priorität: 12.07.2004 DE 102004033782
(43) Veröffentlichungstag der Anmeldung: 04.04.2007
(73) Patentinhaber: ATMEL Germany GmbH, 74072 Heilbronn (DE)
(72) Erfinder: FRIEDRICH, Ulrich, 74248 Ellhofen (DE); FISCHER, Martin, 74629 Pfedelbach (DE); PANGELS, Michael, 71642 Ludwigsburg (DE)
(74) Vertreter: Koch Müller Patentanwaltsgesellschaft mbH
(86) Internationale Anmeldenummer: PCT/EP2005/007496
(87) Internationale Veröffentlichungsnummer: WO 2006/005565

(56) Entgegenhaltungen:
- EP-A- 1 211 635
- DE-A1- 10 158 442
- DE-A1- 19 800 565

## Beschreibung

Die Erfindung betrifft einen Modulator zur Datenübertragung zwischen einem Transponder und einer Basisstation nach dem Oberbegriff des Patentanspruchs 1. Die Erfindung betrifft ferner einen Transponder mit einem solchen Modulator sowie ein entsprechendes Verfahren zur Datenübertragung.

Ein solcher Modulator ist aus DE 198 00 565 A1 bekannt.

Aus der nicht vorveröffentlichten EP 1 538 555 A2 ist ein Transponder bekannt, bei dem zur Modulation ein Schaltungsknoten einer Gleichrichterstufe einer Gleichrichterschaltung mit einer Schalteinrichtung verbunden ist. Der Schaltungsknoten ist nicht mittels einer kapazitiven Kopplung mit einem Eingang der Gleichrichterschaltung verbunden.

Die Erfindung liegt auf dem Gebiet der Transpondertechnologie und insbesondere im Bereich der kontaktlosen Kommunikation zum Zwecke der Identifikation. Wenngleich prinzipiell auf beliebige Kommunikationssysteme und damit beliebige Modulationsvorrichtungen anwendbar, werden die vorliegende Erfindung sowie die ihr zugrunde liegende Problematik nachfolgend in Bezug auf so genannte RFID-Kommunikationssysteme und insbesondere RFID-Modulationsvorrichtungen und deren Anwendungen erläutert. RFID steht dabei für "Radio Frequency Identification". Bei RFID-Systemen werden zwischen einer oder auch mehreren Basisstationen (bzw. Schreib-/Lesegeräten) und einem oder mehreren Transpondern drahtlos Daten übertragen. Zum allgemeinen Hintergrund dieser RFID-Technologie wird auf das "RFID-Handbuch" von Klaus Finkenzeller, Hanser Verlag, dritte aktualisierte Auflage, 2002 verwiesen.

Passive Transponder verfügen über keine eigenständige Energieversorgung, semipassive Transponder verfügen zwar über eine eigene Energieversorgung, jedoch weisen weder aktive noch semipassive Transponder über einen aktiven Sender für die Datenübertragung zur Basisstation auf. Bei derartigen passiven und semipassiven RFID-Systemen wird zur Datenübertragung - insbesondere bei Entfernungen von deutlich mehr als einem Meter - in Verbindung mit UHF oder Mikrowelle in der Regel die so genannte Backscattertechnik (oder auch Rückstreukopplung) verwendet. Bei der Backscattertechnik wird der Rückstreuquerschnitt der Antenne für die Datenrückübertragung vom Transponder zu der Basisstation verwendet. Hierzu werden von der Basisstation modulierte elektromagnetische Trägersignale ausgesendet, die durch eine Sende- und Empfangseinrichtung des Transponders aufgenommen und demoduliert werden. Ferner werden von dem Transponder die elektromagnetischen Trägersignale entsprechend der an die Basisstation zu übertragenden Daten mit einem gängigen Modulationsverfahren moduliert und reflektiert. Dies geschieht im Allgemeinen durch eine Änderung der Eingangsimpedanz der Sende- und Empfangseinrichtung des Transponders, die eine Veränderung der Reflexionseigenschaften einer daran angeschlossenen Antenne bewirkt. Zur Modulation wird neben der Amplitudenmodulation (ASK) bei modernen Kommunikationssystemen zunehmend auch die Phasenmodulation (PSK) und die Frequenzmodulation (FSK) in Verbindung mit einer Pulsweitenmodulation (PWM) eingesetzt. Hierfür sind unterschiedliche Verfahren bekannt.

Bei einem ersten Modulationsverfahrenstyp, das beispielsweise in der Europäischen Patentanmeldung EP 1 211 635 A2 beschrieben ist, wird der Realteil der Eingangsimpedanz durch Zuschalten und Abschalten einer im Wesentlichen ohmschen, also resistiven Last verändert, wodurch hauptsächlich eine Amplitudenänderung oder Amplitudenmodulation der reflektierten Wellen bewirkt wird. Dieses Modulationsverfahren wird als Amplitudentastung (ASK) bezeichnet. Die ohmsche Last belastet hier als zusätzlicher Verbraucher die Spannungsversorgung des Transponders, wodurch die maximal überbrückbare Entfernung zwischen Transponder und Basisstation, insbesondere bei passiven Transpondern ohne eigene Energieversorgung, erheblich verringert wird. ASK-Modulation eignet sich daher insbesondere für geringe Entfernungen zwischen Basisstation und Transponder, ist jedoch bei größer werdenden Entfernungen nur noch bedingt einsatzfähig.

Bei einem zweiten Modulationsverfahrenstyp wird der Imaginärteil der Eingangsimpedanz durch Veränderung der Kapazität eines Kondenstors im Eingangsteil der Sende- und Empfangseinrichtung beeinflusst, wodurch hauptsächlich eine Phasenänderung oder Phasenmodulation der reflektierten Wellen bewirkt wird. Dieses Modulationsverfahren wird als Phasenumtastung (PSK) bezeichnet. Ein derartiges Verfahren ist beispielsweise in der älteren Deutschen Patentanmeldung DE 101 58 442 A1 der Anmelderin dargestellt. Im Vergleich zur ASK-Modulation beeinflusst die PSK-Modulation die Betriebsspannung praktisch nicht, wodurch ein hoher Wirkungsgrad des Transponders erzielbar ist und die maximal überbrückbare Entfernung zwischen Transponder und Basisstation zunimmt. Allerdings nimmt die vom Transponder reflektierte Leistung etwas ab, wenn der Abstand zwischen Transponder und Basisstation kleiner wird. Bei sehr kleinen Entfernungen kann der Fall auftreten, dass die Basisstation das vom Transponder reflektierte, phasenmodulierte Signal nicht mehr detektieren kann. Bei sehr geringen Entfernungen zwischen Basisstation und Transponder ist daher die PSK-Modulation nicht optimal.

Es besteht also der Bedarf, ein RFID-System sowohl im Nahbereich, also bei relativ geringen Entfernungen zwischen Transponder und Basisstation, wie auch im Fernbereich, also bei relativ großen Entfernungen zwischen Transponder und Basisstation betreiben zu können. Hinsichtlich der Definition von Nahbereich und Fembereich wird auf das eingangs genannte RFID-Handbuch von Klaus Finkenzeller verwiesen.

Bei bisher bekannten Modulatoren in RFID-Komunikationssystemen wird von einer Schalteinheit entweder vor (im Falle einer ASK- und PSK-Modulation) oder auch nach (im Falle der ASK-Modulation als Lastmodulation) dem Gleichrichter eingegriffen. In der bislang noch nicht veröffentlichten deutschen Patentanmeldung der Anmelderin mit dem Aktenzeichen DE 103 01 451 wird ein Verfahren beschrieben, bei dem eine mehrstufige Gleichrichteranordnung vorgesehen ist und der Modulator in einen gemeinsamen Knoten, der zwischen benachbarten Stufen des Gleichrichters angeordnet ist, eingreift. Hierbei wird durch die Anordnung eine Amplitudenmodulation bewirkt, indem die Modulation, der an die Basisstation zurückgesandten Trägerwelle, mittels eines mit dem Gleichrichter verbundenen Schaltmittels, bewirkt wird. Hierzu wird dem Schaltmittel ein Modulationssteuersignal zugeführt. Diese Lösung belastet die Schalteinheit dieses DC-Knoten erheblich und ist insbesondere bei passiven insbesondere rückstreubasierten Tranpondersystemen nur durchführbar, sofern im Nahfeld, d.h. bei sehr geringen Abständen, eine hohe Energieabsorption durch den Transponder aus dem elektromagnetischen Feld möglich ist.

Der vorliegenden Erfindung liegt nun die Aufgabe zugrunde, bei der drahtlosen Datenübertragung eine effiziente und möglichst zuverlässige Modulation bereitzustellen, bei der eine Modulation der zurückgesandten Trägerwelle mittels eines Gleichrichters bewirkt wird.

Erfindungsgemäß wird diese Aufgabe durch einen Modulator mit den Merkmalen des Patentanspruchs 1, durch einen Transponder mit den Merkmalen des Patentanspruchs 16 sowie durch ein Verfahren mit den Merkmalen des Patentanspruchs 17 gelöst.

Der Wortlaut der Ansprüche wird hiermit durch Bezugnahme zum Inhalt der Beschreibung gemacht, um unnötige Wiederholungen zu vermeiden.

Die der vorliegenden Erfindung zugrunde liegende Idee besteht darin, zumindest einen AC-Knoten zumindest einer Gleichrichterstufe mit einer steuerbaren Schalteinrichtung zu verbinden. Der AC-Knoten weist eine kapazitive Kopplung mit dem Antenneneingang des Transponders auf, d.h. im Fall des HF Trägersignals ist der AC-Knoten unmittelbar mit dem Eingang des Transponders verbunden. Die steuerbaren Schalteinrichtung, die von einem Ansteuersignal angesteuert wird, ist dazu ausgelegt, eben diesen AC-Knoten mit einem Potenzial, beispielsweise einem Bezugspotenzial zu verbinden, und hierdurch die Eingangsimpedanz des Gleichrichters bzw. des Transponders zu verändem. Dies ermöglicht eine effiziente Phasenmodulation, bei der sich die parasitären Eigenschaften der Bauelemente der Modulationseinrichtung im Hochfrequenzbereich wie auch im niederfrequenten Bereich eingangsseitig nicht auswirken. Gleichzeitig wird ein gegebenenfalls zur Glättung der Ausgangsspannung der Gleichrichterschaltung verwendeter Kondensator nur unwesentlich durch Schaltvorgänge im Zusammenhang mit der Modulation belastet. Zusätzlich oder alternativ kann auch vorgesehen sein, dass die steuerbare Schalteinrichtung auch auf zumindest einen DC-Knoten innerhalb der Gleichrichterschaltung und/oder auf einen Ausgangsknoten der Gleichrichterschaltung zur Lastmodulation eingreift. Dies ist insbesondere dann vorteilhaft, wenn im Nahfeld bei den passiven Transpondern sehr viel Energie aus dem elektromagentischen Feld der Basisstation absorbiert wird und die Modulation ausschließlich nur mittels des Gleichrichter bewirkt werden soll. Alternativ lässt sich jedoch auch die Amplitudenmodulation nicht im Gleichrichter, sondern in einer weiteren Schalteinheit die separat mit dem Antenneneingang des Transponders verbunden ist, durchführen.

Der Vorteil durch das Eingreifen in den AC-Knoten und den DC-Knoten, besteht darin, dass eine Entladung des Stützkondensators am Ausgang der Gleichrichterschaltung durch den erfindungsgemäß modifizierten Modulator automatisch unterbunden wird, indem durch eine nachgeschaltete Diode in Sperrichtung gepolt wird, sofern das Potenzial in der durch die Modulation angesprochenen Gleichrichterstufe geringer wird. Außerdem haben Untersuchungen der Anmelderin gezeigt, dass die Effizienz bei einem Eingriff der steuerbaren Schalteinrichtung in einen AC-Knoten sogar höher ist, als wenn diese in einen DC-Knoten der Gleichrichterschaltung eingreift. Die erfindungsgemäße Modulation eignet sich daher besonders vorteilhaft für die PSK-Modulation insbesondere dann, wenn im Femfeld nur geringe Mengen Energie mittels der Gleichrichters für den Transponder zur Verfügung steht.

Die erfindungsgemäße Modulation bietet darüber hinaus auch eine sehr zuverlässige, in Kombination mit der ASK-Modulation auch eine sehr flexible Modulation, da hier eine effiziente Modulation sowohl für die ASK-Modulation als auch für die PSK-Modulation bereit gestellt wird.

Vorteilhafte Ausgestaltungen und Weiterbildungen der Erfindung sind den Unteransprüchen sowie der Beschreibung unter Bezugnahme auf die Zeichnung entnehmbar.

In einer vorteilhaften Ausgestaltung ist ein Spannungssensor mit einem Ausgang des Gleichrichters und mit einem Eingang der steuerbaren Schalteinrichtung verbunden. Hierdurch lässt sich in Abhängigkeit der Höhe der Ausgangsspannung des Gleichrichters mittels einer Bewertungseinheit, beispielsweise eines UND-Gatters, eine Verknüpfung zwischen der Höhe der anliegenden Ausgangsspannung des Gleichrichters und dem Modulatonssteuersignals durchführen. Hierdurch lässt sich anhand der Schaltschwelle des Gatters eine erste Spannungsschwelle vorsehen, um eine Modulation innerhalb des Gleichrichters wirksam zu unterdrücken, sofern nicht eine Mindestspannung durch den Spannungssensor oder durch das Modulationssteuersignals gegeben ist.
In einer besonders vorteilhaften Ausgestaltung ist zwischen dem Spannungssensor und der Bewertungseinheit ein Komparator vorgesehen, der vorzugsweise als Schmitt-Trigger ausgebildet ist. Hierbei lässt sich an einem Eingang des Komparators eine Referenzspannung anlegen, mittels der eine Spannungsschelle vorgegeben wird. Durch die Spannungsschwelle kann der Gleichrichter mit einer Amplitudenmodulation zusätzlich oder alternativ zu einer Phasenmodulation beaufschlagt werden. Je nach Ausbildung der Bewertungseinheit, beispielsweise als ODER- Verknüpfung, lässt sich eine Kaskadierung der Modulationsart erreichen, indem vorzugsweise eine Phasenmodulation oberhalb einer ersten Spannungsschwelle und eine Amplitudenmodulation zusätzlich oberhalb einer höheren zweiten Spannungsschwelle eingeschaltet wird.

In einer anderen Weiterbildung lässt sich mittels des Spannungssensors auch der Modulationsindex in Abhängigkeit der Ausgangsspannung des Gleichrichters ändern. Hierbei wird insbesondere bei einer Amplitudenmodulation der Grad der Modulation erhöht bis auf Maximal 100%, sofern eine genügend hohe Ausgangsspannung des Gleichrichters gegeben ist.

In einer anderen vorteilhaften Ausgestaltung weist zumindest eine Gleichrichterstufe einen ersten Knoten mit einem hohen HF-Potenzial und einen dem ersten Knoten nachgeschalteten zweiten Knoten mit einem zweiten, gegenüber dem ersten Knoten geringeren HF-Potenzial auf.

In einer Weiterbildung ist die steuerbare Schalteinrichtung ausgangsseitig mit zumindest einem ersten Knoten der Gleichrichterschaltung verbunden. Zusätzlich oder alternativ kann in einer zweiten Weiterbildung die steuerbare Schalteinrichtung ausgangsseitig auch mit zumindest einem zweiten Knoten der Gleichrichterschaltung verbunden sein.

In einer minimalen Ausführungsform ist die Gleichrichterschaltung als einstufiger Gleichrichter ausgebildet. In diesem Falle ist die steuerbare Schalteinrichtung ausgangsseitig mit dem ersten Knoten der einzigen Gleichrichterstufe des einstufigen Gleichrichters verbunden.

In einer alternativen Ausgestaltung ist die Gleichrichterschaltung als mehrstufiger Gleichrichter ausgebildet. Die steuerbare Schalteinrichtung greift dabei vorzugsweise, jedoch nicht notwendigerweise in zumindest zwei der Gleichrichterstufen ein.

In einer vorteilhaften Ausgestaltung weist die steuerbare Schalteinrichtung zumindest einen steuerbaren Schalter auf, dessen Steueranschluss über ein Steuersignal ansteuerbar ist und dessen gesteuerte Strecke somit über das Steuersignal auf- und zusteuerbar ist. Vorzugsweise ist dabei der steuerbare Schalter als Transistor, insbesondere als MOSFET und dabei insbesondere als CMOS-MOSFET, ausgebildet ist. Alternativ kann hier auch ein als Bipolartransistor, JFET, Thyristor, IGBT, etc. ausgebildeter Transistor vorgesehen sein.

Zusätzlich oder alternativ kann der steuerbare Schalter aber auch als Varaktor, insbesondere als MOS-Varaktor, ausgebildet sein.

In einer besonders vorteilhaften Ausgestaltung ist in Reihe zur gesteuerten Strecke des steuerbaren Schalters zumindest ein kapazitives Element, insbesondere ein Kondensator, angeordnet ist. Als kapazitives Element kann auch ein geeignet verschalteter Transistor verwendet werden. Das kapazitive Element kann dabei sowohl bezugspotenzialseitig wie auch zusätzlich oder alternativ ausgangsseitig in Richtung der Gleichrichterschaltung angeordnet sein. Vorzugsweise ist der Ausgang des steuerbaren Schalter über das kapazitive Element mit dem ersten Knoten gekoppelt.

In einer ebenfalls besonders vorteilhaften Ausgestaltung ist parallel und/oder in Reihe zur gesteuerten Strecke des steuerbaren Schalters zumindest ein resistives Element, insbesondere ein Widerstand, angeordnet. Als resistives Element kann auch ein Transistor verwendet werden. Das resistive Element kann dabei sowohl bezugspotenzialseitig als auch zusätzlich oder alternativ ausgangsseitig in Richtung der Gleichrichterschaltung angeordnet sein. Vorzugsweise ist der Ausgang des steuerbaren Schalter über das resistive Element mit dem zweiten Knoten gekoppelt.

In einer ersten Ausgestaltung ist der Modulator als Phasen-Modulator zur Beeinflussung der elektrischen Eigenschaften einer Sende- und Empfangseinrichtung ausgebildet. Zusätzlich oder alternativ kann der Modulator auch als Amplituden-Modulator zur Amplitudentastung und/oder zur Beeinflussung einer Last der Sende- und Empfangseinrichtung so ausgebildet sein, dass das elektromagnetische Trägersignal mit einem Datensignal modulierbar ist.

Die Erfindung wird nachfolgend anhand der in den schematischen Figuren der Zeichnung angegebenen Ausführungsbeispiele näher erläutert. Es zeigen dabei:
- Fig. 1: anhand eines Blockschaltbildes eine erste, allgemeine Anordnung mit erfindungsgemäßem Modulator;
- Fig. 2: anhand eines Blockschaltbildes eine zweite detailliertere Anordnung mit erfindungsgemäßem Modulator;
- Fig. 3: ein erstes Ausführungsbeispiel des erfindungsgemäßen Modulators;
- Fig. 4: ein zweites Ausführungsbeispiel des erfindungsgemäßen Modula- tors;
- Fig. 5: erste Ausgestaltungen der steuerbaren Schalteinrichtung als Transi- stor mit Widerständen;
- Fig. 6: zweite Ausgestaltungen der steuerbaren Schalteinrichtung als Tran- sistor mit Kondensatoren;
- Fig. 7: dritte Ausgestaltungen der steuerbaren Schalteinrichtung als Va- raktor mit Kondensatoren.

In den Figuren der Zeichnung sind gleiche bzw. funktionsgleiche Elemente und Signale - sofern nichts anderes angegeben ist - mit denselben Bezugszeichen versehen worden.

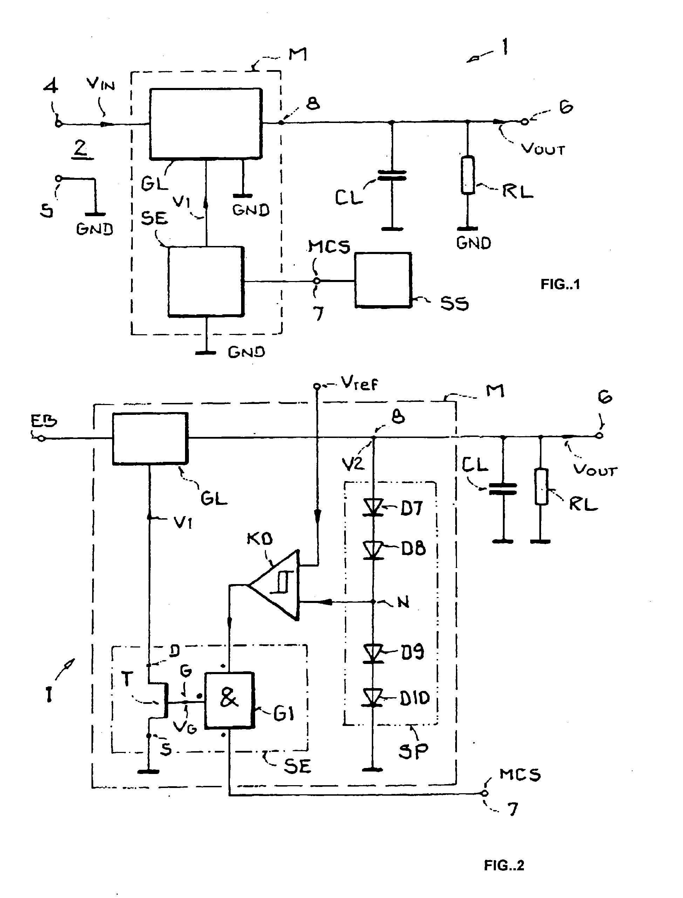

Fig. 1 zeigt anhand eines Blockschaltbildes eine erste allgemeine Anordnung mit erfindungsgemäßem Modulator, bei der eine mit Bezugszeichen 1 bezeichnete Sende- und Empfangseinrichtung für einen passiven oder semipassiven Transponder dargestellt ist, der der bidirektionalen Kommunikation mit einer in Fig. 1 nicht dargestellten Basisstation dient.

Die Sende- und Empfangseinrichtung 1 weist einen Eingang 2 und einen Ausgang 3 auf. Der Eingang 2 weist einen ersten und einen zweiten Eingangsanschluss 4, 5 auf, wobei an dem ersten Eingangsanschluss 4 ein Eingangspotenzial VIN anliegt und an dem zweiten Eingangsanschluss 5 ein Bezugspotenzial, beispielsweise das Potential der Bezugsmasse GND, anliegt. Das Eingangspotenzial VIN ist zum Beispiel das von einer Basisstation gesendete und das vom Transponder empfangene, elektromagnetische Trägersignal oder ein davon abgeleitetes Signal. Am Ausgang 3 ist ein Ausgangsanschluss 6 vorgesehen, an dem ein Ausgangssignal VOUT abgreifbar ist.

Zwischen dem Eingang 2 und dem Ausgang 3 ist ein erfindungsgemäßer Modulator M vorgesehen. Der Modulator M weist einen Gleichrichter GL auf, der einstufig oder auch mehrstufig ausgebildet sein kann. Der Modulator M weist ferner eine steuerbare Schalteinrichtung SE auf, die mit dem Gleichrichter GL verbunden ist und die einen Knoten innerhalb der Gleichrichters GL, wie nachfolgend noch ausführlich beschrieben wird, mit einem Steuerpotenzial V1 beaufschlagt. Die steuerbare Schalteinrichtung SE weist des weiteren einen Steueranschluss 7 auf, in den ein Modulationssteuersignal MCS einkoppelbar ist. Das Modulationssteuersignal MCS wird erfindungsgemäß von einer Steuerschaltung SS erzeugt. Steuerbare Schalteinrichtung SE und Gleichrichter GL sind jeweils mit einem Bezugspotenzial GND verbunden.

Eine Parallelschaltung aus einer kapazitiven Last CL und einer ohmschen Last RL, die zwischen dem Ausgang 8 des Gleichrichters GL und dem Ausgang 3 angeordnet sind, repräsentieren die jeweiligen Lastkomponenten von nachfolgenden, hier nicht näher interessierenden und daher nicht detailliert gezeigten Schaltungsteilen des Transponders, wobei die kapazitive Last CL im Wesentlichen der Glättung der Ausgangsspannung des Gleichrichters GL dient.

Die Basisstation emittiert elektromagnetische Wellen, beispielsweise im UHF-Bereich, die von der Antenne empfangen werden. Ein Teil der Leistung der elektromagnetischen Wellen dient der elektrischen Versorgung des Transponders, der andere Teil wird in Abhängigkeit von zur Basisstation zu übertragenden Daten moduliert und reflektiert. Das am Eingang 2 zwischen den Eingangsanschlüssen 4, 5 anliegende Wechselspannungssignal, das mittels Absorption aus dem Trägerfeld der Basisstation entnommen wird, wird mit Hilfe des Gleichrichters GL gleichgerichtet.

Hinsichtlich des unterschiedlichen Aufbaus und der Funktionsweise eines Modulators zur Phasenumtastung und zur Amplitudentastung im Allgemeinen wird auf die eingangs genannte, noch nicht veröffentliche deutsche Patentanmeldung der Anmelderin mit dem Aktenzeichen DE 103 01 451 verwiesen, die hinsichtlich dieses Gegenstandes hiermit vollinhaltlich in die vorliegende Patentanmeldung mit einbezogen wird.

Fig. 2 zeigt eine Sende- und Empfangseinrichtung 1, bei der eine Diodenstrecke zur Erzeugung einer Referenzspannung benutzt wird, die zur Freigabe der Phasenumtastung und/oder Amplitudentastung dient. Der Modulator M umfasst einen Spannungssensor SP, der als in Reihe angeordnete Dioden D7 - D10 ausgebildet ist. Die Dioden D7 - D10 sind zwischen dem Ausgang 8 des Gleichrichters GL und dem Bezugspotenzial GND in Durchlassrichtung angeordnet. Der Ausgang des Spannungssensor SP der innerhalb des Spannungssensors mit dem Knoten N der Diodenstrecke verbunden ist, ist mit einem Eingang eines Komparators KO verbunden. Ferner weist der Komparator KO, der als Schmitt-Trigger ausgebildet ist, einen weiteren Eingang auf, an dem eine Referenzspannung Vref anliegt. Der Ausgang des Komparators ist innerhalb der Steuereinrichtung SE mit einer Bewertungseinheit BE verbunden, die als UND-Gatter eine Verknüpfung mit dem ebenfalls an der Steuereinrichtung anliegenden Modulationssteuersignal MCS durchführt. Ferner enthält die steuerbare Schalteinrichtung SE einen MOS-Transistor T, der mit einem Anschluss seines Drain-Source-Kanals (gesteuerte Strecke) mit der Versorgungsspannung verbunden ist und mit dem anderen Anschluss seines Drain-Source-Kanals mit dem Bezugspotenzial GND verbunden ist. Ferner ist der Steuereingang G des MOS-Transistors T mit dem Ausgang der Bewertungseinheit verbunden.

Das am Knoten N anliegende Referenzpotenzial Vref dient als Freigabesignal für die Phasenumtastung und/ oder Amplitudenumtastung in Verbindung mit der Spannungsschwelle Vref des Komparatos KO und der Verknüpfung durch die Bewertungseinheit G1. Wenn das Ausgangspotenzial V2 am Ausgang 8 des Gleichrichters GL nicht ausreicht, um die Diodenstrecke D7 - D10 leitend zu machen, liegt an dem mit dem Knoten N verbundenen Eingang des Komparators KO eine sehr geringe Spannung die dem Bezugspotential GND bzw. einer logischen Null entspricht an. Der Ausgang des Komparators KO liegt daher ebenfalls auf "0", und verbleibt in diesem Zustand bis die am Knoten anliegende Spannung größer als die Referenzspannung Vref wird, das heißt der Transistor T ist im gesperrten, das heißt im ausgeschalteten Zustand. Die Modulationseinrichtung M bleibt trotz Ansteuerung durch das Modulationssteuersignal MCS also inaktiv, sofern ein UND Verknüpfung in der Bewertungseinheit gegeben ist. Eine Freigabe, das heißt eine Aktivierung der Modulationseinrichtung M erfolgt in diesem Fall erst ab einem ausreichenden Spannungspegel V2 am Ausgang 8 des Gleichrichters GL, der erst bei entsprechend hoher Feldstärke vorhanden ist. Wenn ein ausreichender Spannungspegel zur Aktivierung vorhanden ist, entspricht das Ausgangssignal der Bewertungseinheit BE dem Modulationssteuersignal MCS, wodurch der Transistor T synchron zum Modulationssteuersignal MCS ein- und ausschaltet.

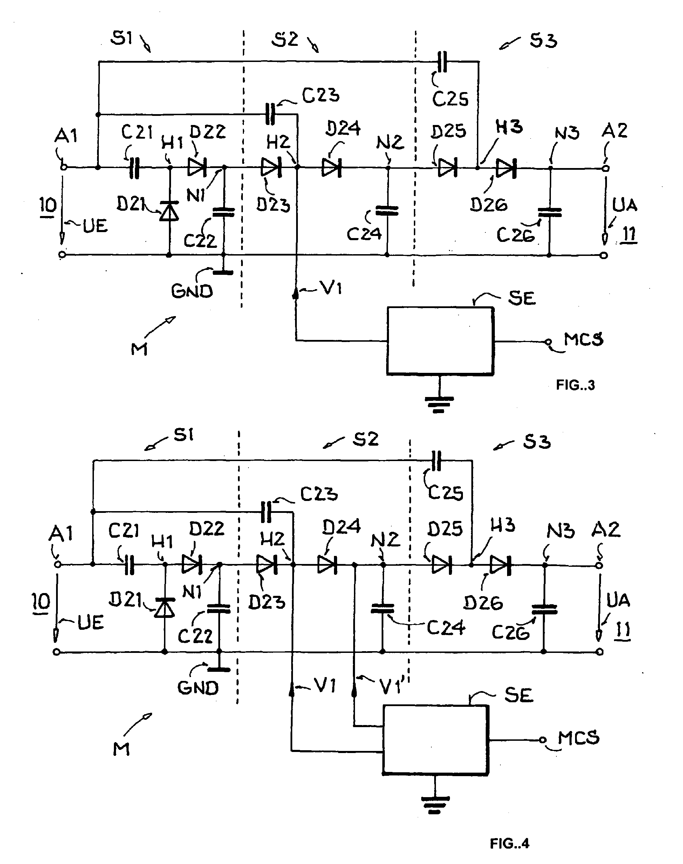

Fig. 3 zeigt ein erstes Ausführungsbeispiel des erfindungsgemäßen Modulators M. Fig. 3 zeigt ein Schaltbild einen Gleichrichter GL mit Modulationseingriff, der als Spannungsvervielfacherschaltung ausgebildet ist. Die Spannungsvervielfacherschaltung GL ist hier lediglich exemplarisch aus drei Stufen S1 - S3 aufgebaut, wobei die einzelnen Gleichrichterstufen S1 - S3 in Serie zwischen einem Eingang 10 und einem Ausgang 11 der Spannungsvervielfacherschaltung GL angeordnet sind. Es versteht sich, dass die Spannungsvervielfacherschaltung GL auch mehr oder weniger als drei Stufen Sx aufweisen kann, wobei die Anzahl der Stufen Sx abhängig von der gewünschten Ausgangsspannung gewählt wird. Die Eingangsspannung UE der Spannungsvervielfacherschaltung GL wird zwischen einem Eingangsanschluss A1 und dem Bezugspotenzial GND angelegt. Die Ausgangsspannung UA kann an einem Ausgangsanschluss A2 abgegriffen werden. Ein Ausgang oder Ausgangsknoten einer vorhergehenden Stufe Sx der Spannungsvervielfacherschaltung GL ist - wie nachfolgend noch erläutert wird - jeweils mit einem Eingang oder Eingangsknoten der nachfolgenden Stufe Sx gekoppelt.

Die erste Stufe S1 umfasst zwei Kondensatoren C21, C22 und zwei Dioden D21, D22. Ein Anschluss des Kondensators C21 ist mit dem Eingangsanschluss A1, der andere über einen ersten Knoten H1 mit der Kathode der Diode D21 und mit der Anode der Diode D22 verbunden. Dieser erste Knoten H1 bildet einen hochfrequenten, so genannten AC-Knoten H1. Die Anode der Diode D21 und ein Anschluss des Kondensators C22 sind mit dem Bezugspotential GND verbunden. Der andere Anschluss des Kondensators C22 und die Kathode der Diode D22 sind miteinander über einen zweiten Knoten N1 verbunden und bilden zusammen mit dem Bezugspotential GND den Ausgang der ersten Stufe S1. Der Ausgang der ersten Stufe S1 bildet einen gegenüber dem ersten Knoten H1 niederfrequenten, so genannten DC-Knoten N1. Der zweite Knoten N1 bildet gleichsam den Eingangsknoten der nachfolgenden Stufe S2.

Die zweite Stufe S2 umfasst zwei Kondensatoren C23, C24 sowie zwei Dioden D23, D24. Die Anode der Diode D23 ist mit einem Ausgangsanschluss N1 der ersten Stufe S1 verbunden. Die Dioden D23, D24 sind in Serie zwischen dem Eingangsknoten N1 und dem als Ausgangsknoten fungierenden zweiten Knoten N2 der zweiten Stufe S2 in Durchlassrichtung geschaltet. Zwischen den Ausgangsknoten N2 und dem Bezugspotential GND ist ein Kondensator C24 geschaltet. Die erste Stufe S1 ist mit der zweiten Stufe S2 zusätzlich über den Kondensator C23 gekoppelt, der mit seinem einen Anschluss mit dem Eingangsanschluss A1 und mit seinem anderen Anschluss mit einem Abgriff zwischen der Diodenreihenschaltung aus den Dioden D23, D24 und damit mit dem ersten Knoten H2 der zweiten Stufe S2 verbunden ist.

Die dritte Stufe S3 umfasst zwei Kondensatoren C25, C26 sowie zwei Dioden D25, D26. Diese sind in gleicher Weise wie in der zweiten Stufe S2 verschaltet. Der zweite Knoten N3 der dritten Stufe S3 bildet gleichsam den Ausgangsanschluss A2 der Spannungsvervielfacherschaltung GL.

Im Beispiel in Fig. 3 ist der erste Knoten H2 der zweiten Stufe S2 zur Phasenumtastung mit einer steuerbare Schalteinrichtung SE, beispielsweise mit einem Ausgang des Transistors T aus Fig. 2, verbunden. Die steuerbare Schalteinrichtung SE verbindet gesteuert durch ein Ansteuersignal, beispielsweise dem Modulationssteuersignal MCS, diesen Knoten H2 synchron mit einem mit dem Bezugspotential GND. Dies bewirkt eine Phasenumtastung der reflektierten Wellen. Der Vorteil eines derartigen Eingriffs liegt auf der Hand. Durch das Eingreifen der steuerbaren Schalteinrichtung SE innerhalb einer Stufe S2 eines mehrstufigen Gleichrichters GL im Vergleich zu einer geschalteten Last nach oder auch vor dem Gleichrichter GL besteht darin, dass die nachgeschaltete kapazitive Last CL und resistive Last RL durch den Schaltvorgang nicht zusätzlich belastet werden.

Fig. 4 zeigt ein zweites Ausführungsbeispiel des erfindungsgemäßen Modulators. Im Unterschied zu Fig. 3 greift hier die steuerbare Schalteinrichtung SE ausgangsseitig zusätzlich auch in den Ausgangs der zweiten Stufe S2, also in den zweiten Knoten N2 der zweiten Stufe S2 ein. Im Beispiel in Fig. 4 wird damit zusätzlich zu der Phasenumtastung auch eine Amplitudentastung vorgenommen, indem der zweite Knoten N2 der zweiten Stufe S2 über die steuerbare Schalteinrichtung SE mit dem Bezugspotenzial GND beaufschlagt wird. Dabei verbindet die steuerbare Schalteinrichtung SE, gesteuert durch das Modulationssteuersignal MCS, diesen Knoten N2 synchron mit dem Bezugspotential GND, was zusätzlich oder alternativ eine Amplitudentastung der reflektierten Wellen bewirkt.

Die beiden Betriebsmodi, das heißt die Amplitudentastung und die Phasenumtastung können dabei gleichzeitig oder auch je nach Applikation auch getrennt voneinander vorgenommen werden. Denkbar wäre ferner, wenn die steuerbare Schalteinrichtung SE nicht als eine Einrichtung ausgebildet ist, sondern mehrere dieser Einrichtung jeweils für einen Betriebsmodus (ASK, PSK) oder für jeweils einen Eingriff in die Gleichrichterschaltung GL vorgesehen ist.

Anstatt der gezeigten Stufen S1 - S3 können auch Stufen in einer De-Ion/Greinacher-Schaltung, einer Stufen in Villard-Schaltung oder dergleichen verwendet werden, bei denen zumindest ein hochfrequenter HF-Knoten Hx und vorzugsweise auch noch ein niederfrequenter NF-Knoten Nx innerhalb einer Stufe Sx gesteuert über eine steuerbare Schalteinrichtung SE mit einem Referenzpotenzial GND verbunden wird.

Wie aus der obigen Beschreibung einiger exemplarischer Ausführungsformen deutlich wird, stellt die Erfindung ein Verfahren und zugehörige Schaltungsanordnungen zur Verfügung, die eine zuverlässige Datenübertragung zwischen einer Basisstation und einem passiven Transponder über einen weiten Entfemungsbereich, beginnend bei relativ kleinen Abständen bis hin zu relativ großen Abständen, ermöglichen. Die Schaltungsanordnungen sind auf sehr einfache Weise in die verschiedenen Transponder-Designs zu integrieren.

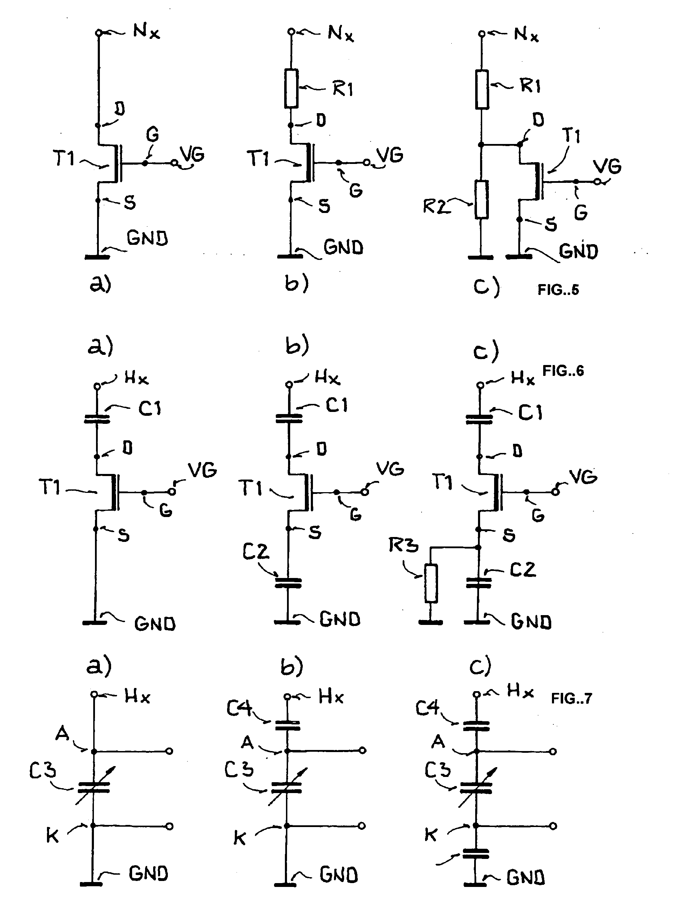

Die Fig. 5 und 6 zeigen erste und zweite Ausgestaltungen der steuerbaren Schalteinrichtung SE mit Widerständen bzw. Kondensatoren. In den Fig. 5 und 6 enthalten die steuerbaren Schalteinrichtungen SE jeweils einen Transistor T1. Der Transistor T1 kann dabei der Transistor T aus Fig. 2 sein oder auch ein davon verschiedenes Schaltmittel. Der Transistor T1 weist einen Steueranschluss G auf, dem zum Beispiel das Modulationssteuersignal MCS oder ein davon abgeleitetes Signal einkoppelbar ist. Über den Steueranschluss G wird die gesteuerte Strecke des Transistors T1, die im Falle eines MOSFET-Transistors durch dessen Gate-Source-Strecke bzw. dessen Gate-Source-Kanal gebildet wird, mit einem Steuersignal VG auf- und zugesteuert. Das Steuersignal VG kann dabei ein von dem Modulationssteuersignal MCD abgeleitetes Signal sein.

In Fig. 5 ist die steuerbare Schalteinrichtung SE für eine zeitkontinuierliche DC-Anwendung ausgelegt. In Fig. 5(a) ist die gesteuerte Strecke des Transistors T1 direkt zwischen dem Bezugspotenzial GND und einem der zweiten NF-Knoten Nx angeordnet. In Fig. 5(b) ist ein erster Widerstand R1 zwischen dem Ausgangsanschluss D des Transistors T1 und dem NF-Knoten Nx angeordnet. In Fig. 5(c) ist zusätzlich ein weiterer Widerstand R2 parallel zu der gesteuerten Strecke des Transistors T1 angeordnet. Eine solche steuerbare Schalteinrichtung SE sorgt im eingeschalteten Zustand des Transistors T1 für einen zusätzlichen DC-Stromverbrauch im Gleichrichter GL und dadurch für eine veränderte Impedanz, wobei dadurch im Wesentlichen der Realteil der Transponder-Impedanz geändert wird.

In Fig. 6 ist die steuerbare Schalteinrichtung SE für eine zeitdiskrete AC-Anwendung ausgelegt. In Fig. 6(a) ist ein erster Kondensator C1 zwischen dem Ausgangsanschluss D des Transistors T1 und dem HF-Knoten Hx angeordnet. Fig. 6(a) zeigt also eine geschaltete Kapazität, die im zeitdiskreten Bereich die Funktion eines Widerstandes aufweist. In Fig. 6(b) ist zusätzlich ein weiterer Kondensator C2 zwischen dem bezugspotenzialseitigen Anschluss S des Transistors T1 und dem Bezugspotenzial GND angeordnet. In Fig. 6(c) ist zusätzlich ein Widerstand R3 parallel zu dem weiteren Kondensator C2, dass heißt zwischen dem bezugspotenzialseitigen Anschluss S des Transistors T1 und dem Bezugspotenzial GND angeordnet. Eine solche steuerbare Schalteinrichtung SE sorgt im eingeschalteten Zustand des Transistors T1, da der Phasenwinkel zwischen Strom und Spannung größer wird, für einen zusätzlichen AC-Leistungsverbrauch im Gleichrichter GL und dadurch für eine veränderte Impedanz. Bei der Veränderung der Impedanz verändert sich der Realteil und der Imaginärteil der Impedanz. Man kann hier auch von einer zusätzlichen Dämpfung sprechen oder alternativ auch von einem Zuschalten einer Kapazität mit einem sehr kleinen - und damit schlechten, da sehr hohem, verlustbehafteten Serienwiderstand - Q-Wert. Es wird hier im Wesentlichen der Imaginärteil der Transponder-Impedanz verändert.

In Fig. 7 enthält die steuerbare Schalteinrichtung SE einen Varaktor C3. Ein Varaktor C3 ist ein spannungsgesteuerter Kondensator, der also Steueranschlüsse aufweist, über die die Kapazität des Varaktor C3 gesteuert und damit eingestellt werden kann. Zu diesem Zweck sind die Kondensatoranschlüsse A, K des Varaktor C3 jeweils mit einem Ausgang einer nicht dargestellten Steuereinrichtung verbunden, die zum Beispiel abhängig von dem Modulationssteuersignal die Kapazität des Varaktors C3 gezielt einstellt.

In Fig. 7(a) ist der Varaktor C3 direkt zwischen dem Bezugspotenzial GND und dem NF-Knoten Hx angeordnet. In Fig. 7(b) ist ein erster Kondensator C4 zwischen dem Ausgangsanschluss A des Varaktors C3 und dem HF-Knoten Hx angeordnet. In Fig. 7(c) ist zusätzlich ein weiterer Kondensator C5 zwischen dem bezugspotenzialseitigen Anschluss K des Varaktors C3 und dem Bezugspotenzial GND angeordnet. Eine derart ausgebildete steuerbare Schalteinrichtung SE verändert ebenfalls im Wesentlichen den Imaginärteil der Transponder-Impedanz.

Obgleich die vorliegende Erfindung vorstehend anhand eines bevorzugten Ausführungsbeispiels beschrieben wurde, ist sie darauf nicht beschränkt, sondern auf vielfältige Art und Weise modifizierbar.

So sei insbesondere die Gleichrichterschaltung, wie oben bereits erwähnt, nicht auf den schaltungstechnischen Aufbau der Figuren 3 und 4 beschränkt, sondern kann beliebig anders, beispielsweise einstufig oder mehrstufig ausgebildet sein.

Auch die Ausgestaltung der steuerbare Schalteinrichtung SE sei lediglich beispielhaft zu verstehen. Selbstverständlich ließen sich hier beliebig andere und erweiterte Ausgestaltungen und Weiterbildungen finden, beispielsweise durch Bereistellen zusätzlicher Widerstände und/oder Kondensatoren, die ausgangsseitig und/oder bezugspotenzialseitig der gesteuerten Strecke des Schalters oder Varaktors parallel und/oder in Serie zugeschaltet sind. Denkbar wäre insbesondere auch eine Kombination der beschriebenen Anordnungen.

Die Erfindung sei insbesondere auch nicht ausschließlich auf RFID-Systeme beschränkt, sondern lässt sich selbstverständlich auch erweitern, beispielsweise auf die Einzelteilerkennung (engl.: item identification). Häufig müssen einzelne Teile nicht eindeutig erkannt werden. Hier reicht es meist aus, dass ein Vorhandensein beispielsweise eines fehlerhaften Teils ausgeschlossen werden kann. Dies wird meist auch als nicht eindeutige Identifikation bezeichnet. Beim Betrieb des Transponders in diesem Zusammenhang weist dieser die Funktion eines fernsteuerbaren Sensors (engl.: remote sensor) auf. Die Erfindung betrifft also auch ausdrücklich solche Sensoren, bei denen eine Kommunikation zum Auslesen und Beschreiben von Daten eines Datenträgers bzw. Sensors vorgenommen wird. Als Beispiel für eine solche so genannte ferngesteuerte Sensoranwendung sei auf einen Temperatur sensor, einen Drucksensor oder dergleichen verwiesen.

### Bezugszeichenliste

- 1: Sende- und Empfangseinrichtung
- 2: Eingang
- 3: Ausgang
- 4: erster Eingangsanschluss
- 5: zweiter Eingangsanschluss
- 6: Ausgangsanschluss
- 7: Steueranschluss
- 8: Ausgang des Gleichrichters
- 10: Eingang
- 11: Ausgang

- A: Anschluss des Varaktors, Anode
- A1: Eingangsanschluss
- A2: Ausgangsanschluss
- C1, C2: Kondensatoren
- C21, C22: Kondensatoren der ersten Gleichrichterstufe
- C23, C24: Kondensatoren der zweiten Gleichrichterstufe
- C25, C26: Kondensatoren der dritten Gleichrichterstufe
- C3: Varaktor
- C4, C5: Kondensatoren
- CL: kapazitive Last
- D: Ausgangsanschluss des Transistors
- D21, D22: Dioden der ersten Gleichrichterstufe
- D23, D24: Dioden der zweiten Gleichrichterstufe
- D25, D26: Dioden der dritten Gleichrichterstufe
- D7-D10: Dioden
- G: Steueranschluss des Transistors
- G1: Bewertungseinheit
- GL: Gleichrichter, Spannungsvervielfacherschaltung
- GND: Bezugspotenzial, Potenzial der Bezugsmasse
- H1 -H3, Hx: hochfrequenter erster Knoten, AC-Knoten
- K: Anschluss des Varaktors, Katode
- KO: Komparator
- M: Modulator
- MCS: Modulationssteuersignal
- N: Abgriff
- N1 - N3, Nx: niederfrequenter zweiter Knoten, DC-Knoten
- R1 - R3: Widerstände
- RL: ohmsche Last
- S: bezugspotenzialseitiger Anschluss des Transistors
- S1 - S3: Gleichrichterstufen
- SE: steuerbare Schalteinrichtung
- SP: Spannungssensor
- SS: Steuerschaltung
- T: MOS-Transistor
- T1: Transistor
- UA: Ausgangsspannung
- UE: Eingangsspannung
- V1: Steuerpotenzial
- VIN: Eingangspotenzial
- VOUT: Ausgangssignal
- VRef: Referenzpotenzial

## Patentansprüche

1. Modulator (M) zur Datenübertragung zwischen einem Transponder und einer Basisstation, der in einem Transponder ein empfangenes elektromagnetisches Trägersignal in Abhängigkeit von zu sendenden Daten phasen-und/oder amplitudenmoduliert, mit
a) einer Gleichrichterschaltung (GL) zur Gleichrichtung des empfangenen elektromagnetischen Trägersignals, die zumindest eine Gleichrichterstufe (S1-S3) mit wenigstens einem Schaltungsknoten (H1-H3) aufweist, wobei
b) wenigstens ein Schaltungsknoten (H1-H3), der keinen Eingang der Gleichrichterschaltung (GL) für das elektromagnetische Trägersignal bildet, mittels einer kapazitiven Kopplung mit einem Eingang (A1) der Gleichrichterschaltung verbunden ist,
**dadurch gekennzeichnet, dass**
c) eine Schalteinrichtung (SE) vorgesehen ist, die ausgangsseitig innerhalb wenigstens einer Gleichrichterstufe (S1-S3) der Gleichrichterschaltung (GL) eingreift, indem der wenigstens eine Schaltungsknoten (H1-H3) dieser Gleichrichterstufe (S1-S3), der keinen Eingang der Gleichrichterschaltung (GL) für das elektromagnetische Trägersignal bildet und der mittels einer kapazitiven Kopplung mit einem Eingang (A1) der Gleichrichterschaltung verbunden ist, mit der Schalteinrichtung (SE) verbunden ist, und
d) eine Modulationssteuereinrichtung vorgesehen ist, die ein Modulationssteuersignal (MCS) für einen Steuereingang (7) der Schalteinrichtung (SE) bereitstellt.

2. Modulator nach Anspruch 1, **dadurch gekennzeichnet, dass** der Gleichrichter (GL) zur Modulation des Trägersignals vorgesehen ist.

3. Modulator nach einem der vorstehenden Ansprüche, **dadurch gekennzeichnet, dass** die Schalteinrichtung (SE) dazu ausgelegt ist, den Schaltungsknoten (H1-H3) mit einem Steuerpotential zu beaufschlagen.

4. Modulator nach einem der vorstehenden Ansprüche, **dadurch gekennzeichnet, dass** ein mit einem Eingang der Schalteinrichtung (SE) und mit einem Ausgang (8) des Gleichrichters (GL) verbundener Spannungssensor (SP) vorgesehen ist.

5. Modulator nach Anspruch 4, **dadurch gekennzeichnet, dass** die Schalteinrichtung (SE) eine Bewertungseinheit (G1) aufweist, mittels der das Signal des Spannungssensors (SP) mit dem Modulationssteuersignal (MCS) vorzugsweise in einer logischen Form verknüpft wird.

6. Modulator nach Anspruch 4 oder 5, **dadurch gekennzeichnet, dass** zwischen einem Ausgang des Spannungssensors (SP) und der Steuereinrichtung (SE) ein Komparator (KO) vorgesehen ist, an dem eine Referenzspannung (VREF) angelegt wird.

7. Modulator nach einem der vorstehenden Ansprüche, **dadurch gekennzeichnet, dass** zumindest eine Gleichrichterstufe (S1-S3) einen ersten Knoten (H1-H3) mit einem hohen HF-Potenzial und einen dem ersten Knoten (H1-H3) nachgeschalteten zweiten Knoten (N1-N3) mit einem zweiten, gegenüber dem ersten Knoten (H1-H3) geringeren HF-Potenzial aufweist.

8. Modulator nach Anspruch 7, **dadurch gekennzeichnet, dass** die steuerbare Schalteinrichtung (SE) ausgangsseitig mit zumindest einem zweiten Knoten (N1-N3) der Gleichrichterschaltung (GL) verbunden ist.

9. Modulator nach wenigstens einem der vorstehenden Ansprüche, **dadurch gekennzeichnet, dass** die Gleichrichterschaltung (GL) als mehrstufiger Gleichrichter (GL) ausgebildet ist und die steuerbare Schalteinrichtung (SE) ausgangsseitig in zumindest zwei der Gleichrichterstufen (S1-S3) eingreift.

10. Modulator nach wenigstens einem der vorstehenden Ansprüche, **dadurch gekennzeichnet, dass** die steuerbare Schalteinrichtung (SE) zumindest einen steuerbaren Schalter (T1, C3) aufweist, dessen Steueranschluss (G) über ein Steuersignal (VG) ansteuerbar ist und dessen gesteuerte Strecke somit über das Steuersignal (VG) auf- und zusteuerbar ist.

11. Modulator nach Anspruch 10, **dadurch gekennzeichnet, dass** der steuerbare Schalter (T1) als Transistor, insbesondere als MOSFET (T1), oder als Varaktor (C3), insbesondere als MOS-Varaktor (C3), ausgebildet ist.

12. Modulator nach wenigstens einem der Ansprüche 10 oder 11, **dadurch gekennzeichnet, dass** in Reihe zur gesteuerten Strecke des steuerbaren Schalters (T1, C3) zumindest ein kapazitives Element (C1, C2, C4, C5), insbesondere ein Kondensator, angeordnet ist.

13. Modulator nach Anspruch 12, **dadurch gekennzeichnet, dass** der Ausgang (D) des steuerbaren Schalter (T1, C3) über das kapazitive Element (C1, C4) mit dem ersten Knoten (Hx) gekoppelt ist.

14. Modulator nach wenigstens einem der Ansprüche 10 bis 13, **dadurch gekennzeichnet, dass** parallel und/oder in Reihe zur gesteuerten Strecke des steuerbaren Schalters (T1, C3) zumindest ein resistives Element (R1-R3), insbesondere ein Widerstand, angeordnet ist.

15. Modulator nach Anspruch 14, **dadurch gekennzeichnet, dass** der Ausgang (D) des steuerbaren Schalter (T1, C3) über das resistive Element (R1) mit dem zweiten Knoten (Nx) gekoppelt ist.

16. Transponder zur drahtlosen Datenkommunikation mit einer Basisstation,
- mit einer Sende- und Empfangseinrichtung (1) zum Empfangen von empfangenen elektromagnetischen Trägersignalen und zum Senden von modulierten Daten,
- mit zumindest einem Modulator (M) nach wenigstens einem der vorstehenden Ansprüche, der ausgebildet ist, durch Eingriff innerhalb der Gleichrichterschaltung (GL) eine Phasen- und/oder eine Amplitudenmodulation in Abhängigkeit von zu sendenden Daten zu bewirken.

17. Verfahren zur Datenübertragung zwischen einem Transponder und einer Basisstation, bei dem in einem Transponder ein empfangenes elektromagnetisches Trägersignal in Abhängigkeit von zu sendenden Daten phasenmoduliert zurückgesendet wird, wobei
- mittels einer Modulationssteuereinrichtung ein Modulationssteuersignal (MCS) erzeugt wird und
- das Modulationssteuersignal (MCS) einer Schalteinrichtung (SE) zugeführt wird,
**dadurch gekennzeichnet, dass**
- die Schalteinrichtung (SE) ausgangsseitig innerhalb wenigstens einer Gleichrichterstufe einer Gleichrichterschaltung (GL) eingreift, indem wenigstens ein Schaltungsknoten (H1-H3) dieser Gleichrichterstufe (S1-S3), der keinen Eingang der Gleichrichterschaltung (GL) für das elektromagnetische Trägersignal bildet und der mittels einer kapazitiven Kopplung mit einem Eingang (A1) der Gleichrichterschaltung verbunden ist, mit der Schalteinrichtung (SE) verbunden wird.

18. Verfahren nach Anspruch 17, **dadurch gekennzeichnet, dass** mittels des Modulationssteuersignal (MCS) im Gleichrichter (GL) zusätzlich zu der Phasenmodulation eine Amplitudenmodulation bewirkt wird.

19. Verfahren nach Anspruch 17 oder Anspruch 18, **dadurch gekennzeichnet, dass** im Modulator (M) eine Modulation der Trägerwelle in Abhängigkeit eines ersten Schwellwerts, vorzugsweise einer Spannung, durchgeführt wird.

20. Verfahren nach Anspruch 19, **dadurch gekennzeichnet, dass** eine Amplitudenmodulation erst bei Überschreiten eines ersten Schwellenwerts durchgeführt wird.

21. Verfahren nach Anspruch 19 oder Anspruch 20, **dadurch gekennzeichnet, dass** eine Amplitudenmodulation erst bei Überschreiten eines zweiten Schwellenwerts, der ein höheres Potenzial als der erste Schwellwert aufweist, durchgeführt wird.

22. Modulationsverfahren nach einem der Ansprüche 17 bis 21, **dadurch gekennzeichnet, dass** in Abhängigkeit von der Höhe des Potenzials des Gleichrichters (GL) der Modulationsindex geändert wird.

## Claims

1. Modulator (M) for data transmission between a transponder and a base station, which modulates a received electromagnetic carrier signal in phase and/or amplitude in a transponder in dependence on data to be transmitted, comprising
a) a rectifier circuit (GL) for rectification of the received electromagnetic carrier signal, which comprises at least one rectifier stage (S1-S3) with at least one circuit junction (H1-H3), wherein
b) at least one circuit junction (H1-H3), which does not form an input of the rectifier circuit (GL) for the electromagnetic carrier signal, is connected by means of a capacitive coupling with an input (A1) of the rectifier circuit,
**characterised in that**
c) a switching device (SE) is provided, which at the output side intervenes within at least one rectifier stage (S1-S3) of the rectifier circuit (GL) **in that** the at least one circuit junction (H1-H3) of this rectifier stage (S1-S3), which does not form an input of the rectifier circuit (GL) for the electromagnetic carrier signal and which is connected by means of a capacitive coupling with an input (A1) of the rectifier circuit, is connected with the switching device (SE), and
d) a modulation control device is provided which provides a modulation control signal (MCS) for a control input (7) of the switching device (SE).

2. Modulator according to claim 1, **characterised in that** the rectifier (GL) is provided for modulation of the carrier signal.

3. Modulator according to one of the preceding claims, **characterised in that** the switching device (SE) is designed for the purpose of acting on the circuit junction (H1-H3) with a control potential.

4. Modulator according to any one of the preceding claims, **characterised in that** a voltage sensor (SP) connected with an input of the switching device (SE) and with an output (8) of the rectifier (GL) is provided.

5. Modulator according to claim 4, **characterised in that** the switching device (SE) comprises an evaluating unit (G1) by means of which the signal of the voltage sensor (SB) is linked with the modulation control signal (MCS) preferably in a logical form.

6. Modulator according to claim 4 or 5, **characterised in that** a comparator (KO) to which a reference voltage (VREF) is applied is provided between an output of the voltage sensor (SP) and the control device (SE).

7. Modulator according to any one of the preceding claims, **characterised in that** at least one rectifier stage (S1-S3) has a first junction (H1-H3) with a high HF potential and a second junction (N1-N3), which is connected downstream of the first junction (H1-H3), with a second HF potential lower by comparison with the first junction (H1-H3).

8. Modulator according to claim 7, **characterised in that** the controllable switching device (SE) is connected at the output side with at least one second junction (N1-N3) of the rectifier circuit (GL).

9. Modulator according to at least one of the preceding claims, **characterised in that** the rectifier circuit (GL) is constructed as a multi-stage rectifier (GL) and the controllable switching device (SE) at the output side intervenes in at least two of the rectifier stages (S1-S3).

10. Modulator according to at least one of the preceding claims, **characterised in that** the controllable switching device (SE) comprises at least one controllable switch (T1, C3), the control connection (G) is controllable in drive by way of a control signal (VG) and the controlled path thereof is thus controllable open and closed by way of the control signal (VG).

11. Modulator according to claim 10, **characterised in that** the controllable switch (T1) is constructed as transistor, particularly as a MOSFET (T1), or as a varactor (C3), particularly as a MOS varactor (C3).

12. Modulator according to at least one of claims 10 and 11, **characterised in that** at least one capacitive element (C1, C2, C4, C5), particularly a capacitor, is arranged in series with the controlled path of the controllable switch (T1, C3).

13. Modulator according to claim 12, **characterised in that** the output (D) of the controllable switch (T1, C3) is coupled with the first junction (Hx) by way of the capacitive element (C1, C4).

14. Modulator according to at least one of claims 10 to 13, **characterised in that** at least one resistive element (R1-R3), particularly a resistor, is arranged in parallel and/or series with the controlled path of the controllable switch (T1, C3).

15. Modulator according to claim 14, **characterised in that** the output (D) of the controllable switch (T1, C3) is coupled with the second junction (Nx) by way of the resistive element (R1).

16. Transponder for wire-free data communication with a base station,
- with a transmitting and receiving device (1) for reception of received electromagnetic carrier signals and for transmission of modulated data, and
- with at least one modulator (M) according to at least one of the preceding claims, which is constructed to produce, by an intervention within the rectifier circuit (GL), a phase and/or amplitude modulation in dependence on data to be transmitted.

17. Method for data transmission between a transponder and a base station, in which a received electromagnetic carrier signal is transmitted back, with phase modulation in dependence on data to be transmitted, in a transponder, wherein
- a modulation control signal (MCS) is generated by means of a modulation control device and
- the modulation control signal (MCS) is fed to a switching device (SE),
**characterised in that**
- the switching device (SE) at the output side intervenes within at least one rectifier stage of a rectifier circuit (GL) **in that** at least one circuit junction (H1-H3) of this rectifier stage (S1-S3), which does not form an input of the rectifier circuit (GL) for the electromagnetic carrier signal and which is connected with an input (A1) of the rectifier circuit by means of a capacitive coupling, is connected with the switching device (SE).

18. Method according to claim 17, **characterised in that** an amplitude modulation is produced by means of the modulation control signal (MCS) in the rectifier (GL) additionally to the phase modulation.

19. Method according to claim 17 or claim 18, **characterised in that** a modulation of the carrier wave is performed in the modulator (M) in dependence on a first threshold value, preferably a voltage.

20. Method according to claim 19, **characterised in that** an amplitude modulation is performed only when a first threshold value is exceeded.

21. Method according to claim 19 or claim 20, **characterised in that** an amplitude modulation is performed only when a second threshold value having a higher potential than the first threshold value is exceeded.

22. Modulation method according to any one of the claim 17 to 21, **characterised in that** the modulation index is changed in dependence on the level of the potential of the rectifier (GL).

## Revendications

1. Modulateur (M) pour la transmission de données entre un transpondeur et une station de base, qui module au sein d'un transpondeur, en phase et/ou en amplitude, un signal porteur électromagnétique reçu en fonction de données à envoyer, comprenant :
a) un circuit redresseur (GL) pour le redressement du signal porteur électromagnétique reçu, qui présente au moins un étage redresseur (S1-S3) avec au moins un noeud de circuit (H1-H3), sachant que
b) au moins un noeud de circuit (H1-H3), qui ne forme pas une entrée du circuit redresseur (GL) pour le signal porteur électromagnétique, est couplé de façon capacitive à une entrée (A1) du circuit redresseur,
**caractérisé en ce que** l'on prévoit
c) un dispositif de commutation (SE), qui intervient du côté sortie à l'intérieur d'au moins un étage redresseur (S1-S3) du circuit redresseur (GL), en reliant au dispositif de commutation (SE) l'un au moins noeud de circuit (H1-H3) de cet étage redresseur (S1-S3), qui ne constitue pas une entrée du circuit redresseur (GL) pour le signal porteur électromagnétique et qui est couplé de façon capacitive à la sortie (A1) du circuit redresseur, et
d) un dispositif de pilotage de la modulation qui fournit un signal de pilotage de la modulation (MCS) pour une entrée de commande (7) du dispositif de commutation (SE).

2. Modulateur selon la revendication 1, **caractérisé en ce que** le circuit redresseur (GL) est prévu pour moduler le signal porteur.

3. Modulateur selon l'une quelconque des revendications précédentes, **caractérisé en ce que** le dispositif de commutation (SE) est conçu pour exciter le noeud de circuit (H1-H3) par un potentiel de commande.

4. Modulateur selon l'une quelconque des revendications précédentes, **caractérisé en ce que** l'on prévoit un détecteur de tension (SP) relié à une entrée du dispositif de commutation (SE) et à une sortie (8) du circuit redresseur (GL).

5. Modulateur selon la revendication 4, **caractérisé en ce que** le dispositif de commutation (SE) présente une unité d'évaluation (G1), au moyen de laquelle le signal du détecteur de tension (SP) est combiné à un signal de pilotage de la modulation (MCS), de préférence sous une forme logique.

6. Modulateur selon la revendication 4 ou 5, **caractérisé en ce qu'**entre une sortie du détecteur de tension (SP) et du dispositif de commutation (SE) on prévoit un comparateur (KO) auquel on applique une tension de référence (VREF).

7. Modulateur selon l'une quelconque des revendications précédentes, **caractérisé en ce qu'**au moins un étage redresseur (S1-S3) présente un premier noeud (H1-H3) à potentiel HF élevé et un deuxième noeud (N1-N3) placé après le premier noeud (H1-H3) présentant un deuxième potentiel HF plus faible que celui du premier noeud (H1-H3).

8. Modulateur selon la revendication 7, **caractérisé en ce que** le dispositif de commutation activable (SE) est relié côté sortie à au moins un deuxième noeud (N1-N3) du circuit redresseur (GL).

9. Modulateur selon l'une au moins des revendications précédentes, **caractérisé en ce que** le circuit redresseur (GL) est réalisé sous la forme d'un circuit redresseur (GL) à plusieurs étages, et **en ce que** le dispositif de commutation (SE) intervient du côté sortie dans au moins deux des étages détecteurs (S1-S3).

10. Modulateur selon l'une au moins des revendications précédentes, **caractérisé en ce que** le dispositif de commutation (SE) activable présente au moins un commutateur (T1, C3) activable dont la borne de commande (G) est activable par un signal de commande (VG) et dont la zone commandée peut ainsi être activée en ouverture et en fermeture par le signal de commande (VG).

11. Modulateur selon la revendication 10, **caractérisé en ce que** le commutateur activable (Tl) est réalisé sous la forme d'un transistor, plus particulièrement d'un transistor MOS (T1), ou sous la forme d'un varactor (C3), plus particulièrement d'un varactor MOS (C3).

12. Modulateur selon l'une au moins des revendications 10 ou 11, **caractérisé en ce qu'**au moins un élément capacitif (C1, C2, C4, C5), plus particulièrement un condensateur, est monté en série dans la zone commandée du commutateur activable (T1, C3).

13. Modulateur selon la revendication 12, **caractérisé en ce que** la sortie (D) du commutateur activable (T1, C3) est couplée au premier noeud (Hx) par l'intermédiaire de l'élément capacitif (C1, C4).

14. Modulateur selon l'une au moins des revendications 10 à 13, **caractérisé en ce qu'**au moins un élément résistif (R1-R3), plus particulièrement une résistance, est monté en parallèle et/ou en série dans la zone commandée du commutateur activable (T1, C3).

15. Modulateur selon la revendication 14, **caractérisé en ce que** la sortie (D) du commutateur activable (T1, C3) est couplée au deuxième noeud (Nx) par l'intermédiaire de l'élément résistif (R1).

16. Transpondeur pour la communication sans fil de données à une station de base, comprenant :
. un dispositif émetteur-récepteur (1) pour la réception de signaux porteurs électromagnétiques reçus et pour l'émission de données modulées,
. au moins un modulateur (M) selon l'une au moins des revendications précédentes, conçu de manière à effectuer une modulation de phase et/ou d'amplitude en fonction des données à émettre par intervention à l'intérieur du circuit redresseur (GL).

17. Procédé de transmission de données entre un transpondeur et une station de base, selon lequel, dans un transpondeur, un signal porteur électromagnétique reçu est renvoyé modulé en phase en fonction des données à envoyer, procédé dans lequel
. on génère un signal de pilotage de la modulation (MCS) au moyen d'un dispositif de pilotage de la modulation, et
. on achemine le signal de pilotage de la modulation (MCS) vers un dispositif de commutation (SE)
**caractérisé en ce que** :
. le dispositif de commutation (SE) intervient du côté sortie à l'intérieur d'au moins un étage redresseur d'un circuit redresseur (GL) **en ce qu'**un noeud de circuit (H1-H3) au moins de cet étage redresseur (S1-S3), qui ne constitue pas une entrée du circuit redresseur (GL) pour le signal porteur électromagnétique et qui est couplé de façon capacitive à la sortie (A1) du circuit redresseur, est relié au dispositif de commutation (SE).

18. Procédé selon la revendication 17, **caractérisé en ce qu'**au moyen du signal de pilotage de la modulation (MCS), on effectue dans le circuit redresseur (GL), en plus de la modulation de phase, une modulation d'amplitude.

19. Procédé selon la revendication 17 ou 18, **caractérisé en ce que** l'on effectue dans le modulateur (M) une modulation de l'onde porteuse en fonction d'une première valeur de seuil, de préférence d'une tension.

20. Procédé selon la revendication 19, **caractérisé en ce que** l'on n'effectue une modulation d'amplitude que lorsque l'on dépasse une première valeur de seuil.

21. Procédé selon la revendication 19 ou 20, **caractérisé en ce que** l'on n'effectue une modulation d'amplitude que lorsque l'on dépasse une deuxième valeur de seuil présentant un potentiel plus élevé que la première valeur de seuil.

22. Procédé de modulation selon l'une quelconque des revendications 17 à 21, **caractérisé en ce que** l'indice de modulation est modifié en fonction du potentiel du circuit redresseur (GL).
